# EUROPEAN PATENT APPLICATION

(11) **EP 2 749 764 A1**
(43) Date of publication of application: **02.07.2014**
(21) Application number: 12199424.8
(22) Date of filing: 27.12.2012
(51) Int. Cl.: F03B 3/12

(54) **Turbine blade, manufacturing of the turbine blade and use of the turbine blade**

(71) Applicant: Siemens Aktiengesellschaft, 80333 München (DE)
(72) Inventor: Dornauer, Marco, 90562 Heroldsberg (DE); Ibach, Frank, Bristol, BS66NB (GB); Johannes, Martin, Dr., 91052 Erlangen (DE)

(57) **Abstract**

The present invention provides a turbine blade (1), preferably an underwater turbine blade, with at least one prefabricated inner core template (11) with at least one core template surface (111) and at least one outer shell (12) with at least one shell surface (121); whereby the core template surface (111) and the shell surface (121) are oppositely arranged to each other and permanently connected together. Additionally, the present invention is directed to a method for manufacturing the underwater turbine blade. The method comprises following steps: a) Providing the prefabricated inner core template with the core template surface; b) Attaching at least one precursor material of a shell material of the outer shell to the core template surface; and c) Converting of the attached precursor material into the shell material such that the outer shell with the shell surface is formed. Preferably an outer template is arranged to the attached precursor material before the converting the precursor material and/or while the converting the precursor. For instance, the used outer template is a mould. With the aid of the outer template an accurate and repeatable manufacturing of the shell of the underwater turbine blade is possible. The turbine blade is used for driving a turbine, whereby hydrodynamic energy of fluid energy of a fluid is converted into electric energy.

## Description

### BACKGROUND OF THE INVENTION

### 1. Field of the Invention

This invention relates to turbine blade, a manufacturing of the turbine blade and a use of the turbine blade.

### 2. Description of the Related Art

For instance, the turbine blade is a turbine blade for an underwater turbine (underwater turbine blade). The underwater turbine blade is a turbine blade of a tidal turbine. Such a turbine blade is exposed to water pressure which is dependent on the water depth where the turbine blade is located. The water pressure causes internal mechanical stress of the blade.

GB 2400021 B describes a possibility for reducing this internal mechanical stress of the underwater blade: A hollow outer shell of the underwater blade is filled with polymeric foam. Based on the described method for manufacturing the underwater turbine blade variable features of the turbine blade are possible.

### SUMMARY OF THE INVENTION

It is an object of the invention to provide a turbine blade, preferably an underwater turbine blade that withstands varied water pressures. A probability for variable features of the underwater blade in comparison the state of the art should be less.

Another object of the invention is the providing of a method for manufacturing the turbine blade. Additionally a use of the turbine blade is should be provided.

These objects are achieved by the invention specified in the claims.

The present invention provides a turbine blade with at least one prefabricated inner core template with at least one core template surface and at least one outer shell with at least one shell surface; whereby the core template surface and the shell surface are oppositely arranged to each other and permanently connected together. Preferably the turbine blade is selected from the group consisting of wind turbine blade and underwater turbine blade.

Additionally, the present invention is directed to a method for manufacturing the turbine blade. The method comprises following steps: a) Providing the prefabricated inner core template with the core template surface; b) Attaching at least one precursor material of a shell material of the outer shell to the core template surface; and c) Converting of the attached precursor material into the shell material such that the outer shell with the shell surface is formed. Preferably an outer template is arranged to the attached precursor material before the converting the precursor material and/or while the converting the precursor. For instance, the used outer template is a mould. With the aid of the outer template an accurate and repeatable manufacturing of the shell of the underwater turbine blade is possible.

Finally a use of the turbine blade for driving a turbine is provided, whereby hydrodynamic energy of fluid energy of a fluid is converted into electric energy. The fluid is air for a wind turbine blade and water for a water turbine blade (preferably an underwater turbine blade).

The turbine blade comprises one or more inner cores (core bodies). Theses cores are at least partially enveloped by the outer shell of the blade. The result is a sandwich structure with an outer shell which surrounds the inner core template. In the inner space of the outer shell the inner core template is arranged. The inner space of the outer shell is at least partly filled by the inner core template. In contrast to the described state of the art the inner core is prefabricated before the outer shell is manufactured. By this a filling of an inner space of the outer shell with precursor material of the core material is obsolete. There is no problem with the occurrence of gaps and spaces caused by the filling process.

In a preferred embodiment the turbine blade comprises at least one inner support structure for supporting the outer shell. The inner support structure comprises at least one support structure surface. The prefabricated inner core template comprises at least one further template surface. The further core template surface and the support structure surface are oppositely arranged to each other and permanently connected together.

The inner support structure is a supporting core structure. For instance, the support structure comprises ribs which extend from one shell wall (blade wall) to another shell wall through the inner space of the outer shell. By this a blade structure of the turbine blade is tightened.

The mentioned surfaces can be indirectly connected to each other. For instance, there is an adherence film arranged between the correspondent surfaces. But preferably, the surfaces are connected directly to each other. Therefore, in a preferred embodiment, the core template surface and the shell surface and/or the further template surface and the support structure surface are directly connected together.

In a preferred embodiment the outer shell comprises at least one shell material which is a composite material. The composite material comprises a first phase (matrix phase). Particles out of at least one second phase are distributed in the first phase. Preferably the composite material is a fiber-reinforced plastic with synthetic matrix material and fibers which are distributed in the synthetic matrix material. The fibers comprise at least one fiber material which is selected from the group consisting of carbon, ceramic and glass. For instance, the shell material comprises glass fiber reinforced plastic or carbon fiber reinforced plastic. Mixtures of different fiber materials are possible, too.

For the manufacturing of such a turbine blade a precursor material is used which comprises at least one crosslinkable material. For instance, the crosslinkable material comprises polymer material or curable material. The curable material is a resin like epoxy resin. The converting of the precursor material into the shell material is carried out by crosslinking the crosslinkable material. For instance, for the converting a curing the curable material is takes place. Preferably a precursor material is used which comprises fibers which are pre-impregnated with the crosslinkable material.

Alternatively dry (not pre-impregnated) fibers are attached to the inner core template. After this step crosslinkable material is applied. The next step is a crosslinking of the crosslinkable material. The result of both described alternatives is a turbine blade with a shell material with reinforced plastic.

In a preferred embodiment the prefabricated inner core template comprises at least one synthetic template material. For instance the inner core template is substantially out of the synthetic template material. Synthetic materials have a low density resulting in a relatively low weight of the inner core template and thus resulting in a relatively low weight of the underwater turbine blade. The synthetic template material can comprise just one synthetic material as well as mixtures of different synthetic materials.

In a preferred embodiment the prefabricated inner core template comprises at least one inner mould. In a further preferred embodiment the prefabricated inner core template comprises at least one inner foam.

The inner core template can comprise one or more template parts. For instance, these template parts are separated by the above mentioned support structure. Additionally or alternatively the inner core template can comprise itself a sandwich structure. In a further preferred embodiment the prefabricated inner core template comprises a core template layer which forms the core template surface. The core template layer is firmly connected to the shell. After the manufacturing the turbine blade inner parts of the core template can be removed without the core template layer. For instance, such inner parts comprise of soft inner material which can be sucked out after the manufacturing of the permanent and firm connection between the core template surface and shell surface. The core template layer, which forms the core template surface, remains connected to the shell. This template layer can act as a barrier layer. For instance, the turbine blade is an underwater turbine blade. The barrier layer can inhibit a penetration of seawater into the shell structure from the inner side of the shell.

Beyond the advantages mentioned before following additional advantages are to be pointed out:
- The inner core template (or template layer) remain connected to the shell and influences with its physical properties the mechanical properties of the turbine blade. The mechanical properties of such an turbine blade are improved in comparison to the mechanical properties of comparable turbine blade based on the state of the art.
- As a function of the inner core template additional functionalities can be introduced, for instance via the use of an inner core template with an appropriate composite material.
- The manufacturing of the underwater turbine blade is easier and cheaper in comparison to the state of the art. The manufacturing is cost saving.
- Additionally, the quality of the resulting turbine blade is higher than that of a comparable turbine blade concerning the state of the art.

### BIEF DESCRIPTION OF THE DRAWING

Further features and advantages of the invention are produced from the description of exemplary embodiments with reference to the schematic figures.
Figure 1 shows a cross section of an turbine blade.
Figure 2 shows a cross section of an turbine blade in a special manufacturing step.
Figure 3A shows a cross section of an alternative embodiment of turbine blade in the same manufacturing step as it is shown in figure 2.
Figure 3B shows a cross section of the turbine blade according Figure 3A after sucking inner template material.

### DETAILED DESCRIPTION OF THE INVENTION

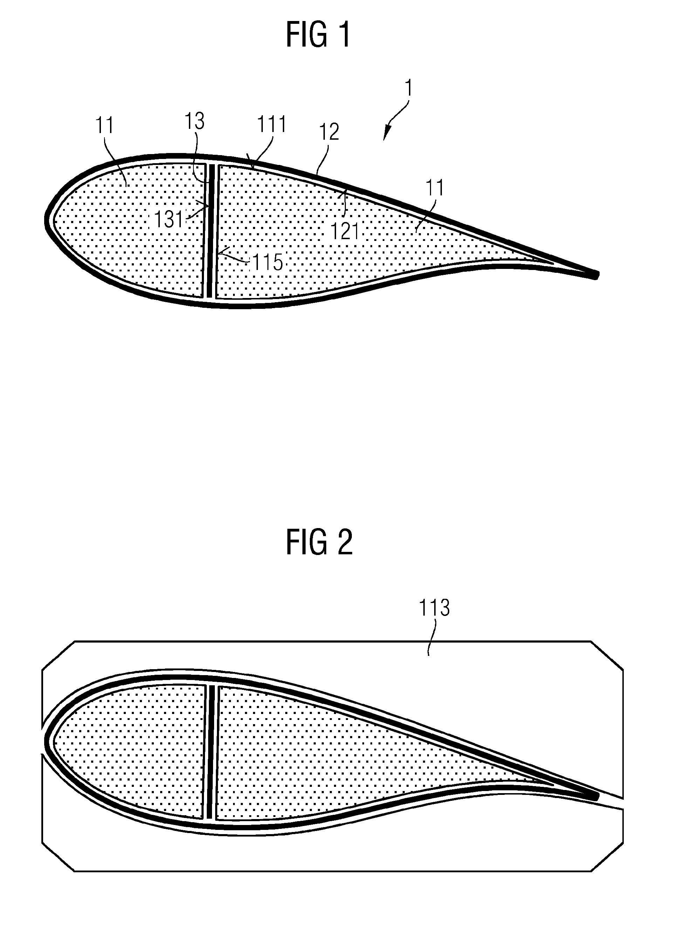

Given is an turbine blade 1 with at least one prefabricated inner core template 11 with at least one core template surface 111 and at least one outer shell 12 with at least one shell surface 121 (fig. 1). The core template surface and the shell surface are oppositely arranged to each other and permanently connected together.

The inner core template is a mould. It comprises foam with synthetic material.

A shell material of the outer shell comprises a reinforced glass fiber plastic. In an alternative embodiment the shell material comprises a reinforced carbon fiber plastic.

The turbine blade comprises at least one inner support structure 13 for supporting the shell. The inner support structure comprises at least one support structure surface 131. The prefabricated inner core template comprises at least one further template surface 115. The further core template surface and the support structure surface are oppositely arranged to each other and permanently connected together.

For the manufacturing of the underwater turbine following steps are carried out: a) providing the prefabricated inner core template with the core template surface, b) attaching at least one precursor material of a shell material of the outer shell to the core template surface and c) Converting of the attached precursor material into the shell material such that the outer shell with the shell surface is formed. The used precursor material is pre-impregnated fiber material. In an alternative embodiment dry (not pre-impregnated) fibers are attached to the inner core template. After that crosslinkable material is applied. Next, this applied crosslinkable material is crosslinked.

Before the converting of the precursor material and/or while the converting of the precursor are carried out an outer template (mould) is arranged to the attached precursor material (fig. 2).

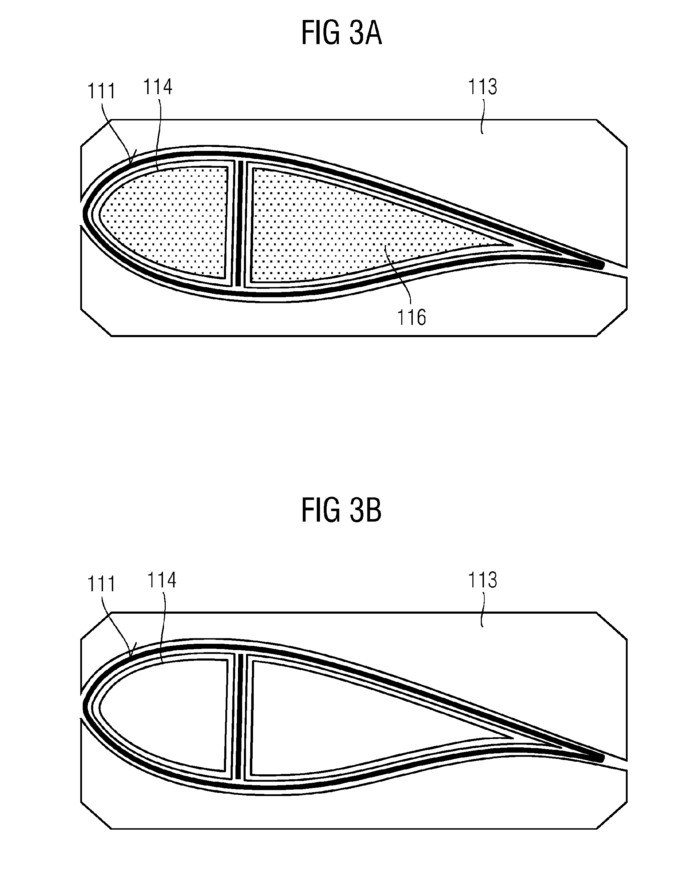

An alternative embodiment of the turbine blade results as follows: The prefabricated inner core template comprises at least one core template layer 114 which forms the core template surface (Fig. 3A). After that manufacturing the firm connection between the template surface and the shell surface inner soft material 116 of the prefabricated core template can be removed such that the core template layer remains connected to the outer shell. This is carried out by sucking the inner core material.

The described underwater turbine blades are used for driving an underwater turbine whereby hydrodynamic energy of fluid energy of water is converted into electric energy.

## Claims

1. Turbine blade (1) with
- at least one prefabricated inner core template (11) with at least one core template surface (111); and
- at least one outer shell (12) with at least one shell surface (121);
whereby
- the core template surface and the shell surface are oppositely arranged to each other and permanently connected together.

2. Turbine blade according to claim 1 with at least one inner support structure (13) for supporting the shell (12), wherein
- the inner support structure (13) comprises at least one support structure surface (131);
- the prefabricated inner core template (11) comprises at least one further template surface (115); and
- the further core template surface (115) and the support structure surface (131) are oppositely arranged to each other and permanently connected together.

3. Turbine blade according to claim 1 or 2, wherein the core template surface and the shell surface and/or the further template surface and the support structure surface are directly connected together.

4. Turbine blade according to one of the claims 1 to 3, wherein the outer shell comprises at least one shell material which is a composite material.

5. Turbine blade according to claim 4, wherein the composite material is a fiber-reinforced plastic with synthetic matrix material and fibers which are distributed in the synthetic matrix material.

6. Turbine blade according to claim 5, wherein the fibers comprise at least one fiber material which is selected from the group consisting of carbon, ceramic, glass and plastic.

7. Turbine blade according to one of the claims 1 to 6, wherein the prefabricated inner core template comprises at least one synthetic template material.

8. Turbine blade according to one of the claims 1 to 7, wherein the prefabricated inner core template comprises at least one inner mould.

9. Turbine blade according to one of the claims 1 to 8, wherein the prefabricated inner core template comprises at least one inner foam.

10. Turbine blade according to one of the claims 1 to 9, wherein the prefabricated inner core template comprises a core template layer which forms the core template surface.

11. Turbine blade according to one of the claims 1 to 10, wherein the turbine blade is selected from the group consisting of wind turbine blade and underwater turbine blade.

12. Method for manufacturing a turbine blade according to one of the claims 1 to 11; the method comprising:
a) Providing the prefabricated inner core template (11) with the core template surface (111);
b) Attaching at least one precursor material of a shell material of the outer shell (12) to the core template surface (111); and
c) Converting of the attached precursor material into the shell material such that the outer shell (12) with the shell surface (121) is formed.

13. Method according to claim 12, wherein an outer template is arranged to the attached precursor material before the converting of the precursor material and/or while the converting of the precursor material.

14. Use of the turbine blade according o one of the claims 1 to 11 for driving a turbine, whereby hydrodynamic energy of fluid energy of a fluid is converted into electric energy.
